# EUROPÄISCHE PATENTSCHRIFT

(11) **EP 1 536 598 B1**
(45) Veröffentlichungstag und Bekanntmachung des Hinweises auf die Patenterteilung: **11.07.2007**
(21) Anmeldenummer: 03027207.4
(22) Anmeldetag: 27.11.2003
(51) Int. Cl.: H04L 12/56

(54) **Verfahren zur Paketierung zeitsynchroner Daten bei einer Übertragung in einem Paketdatennetz**
Method for packetizing time synchronous data during transmission in a packet data network
Procédé de mise en paquet de données synchrones lors de la transmission dans un réseau de donnée par paquet

(43) Veröffentlichungstag der Anmeldung: 01.06.2005
(73) Patentinhaber: SIEMENS AKTIENGESELLSCHAFT, 80333 München (DE)
(72) Erfinder: Tuppa, Walter, Dr., 1170 Wien (AT)
(74) Vertreter: Berg, Peter

(56) Entgegenhaltungen:
- EP-A- 1 248 436
- WO-A-02/073901
- US-A- 6 094 420
- US-B1- 6 259 695

## Beschreibung

Die Erfindung betrifft ein Verfahren zur Paketierung zeitsynchroner Daten bei einer Übertragung in einem Paketdatennetz,
- wobei im Paketdatennetz mehrere zeitsynchrone Verbindungen bestehen,
- wobei Datenpakete einer Verbindung periodisch wiederkehrend im Abstand einer Periodendauer versendet werden
- wobei der Beginn der Datenübertragung einer Verbindung derart gewählt wird, dass die Datenpakete der verschiedenen Verbindungen im Bezug auf die Zeit möglichst gleichverteilt sind,
- wobei ein der Periodendauer entsprechendes Zeitintervall in eine der Anzahl der möglichen Verbindungen entsprechende Zahl gleich großer Zeitschlitze geteilt wird,
- wobei jeder möglichen Verbindung ein Zeitschlitz fix zugeordnet wird und
- wobei beim Aufbau einer neuen Verbindung der Beginn der Datenübertragung derart gewählt wird, dass ein neues Datenpaket in den dieser Verbindung entsprechenden Zeitschlitz eingefügt wird.

Weiterhin betrifft die Erfindung eine Vorrichtung zur Paketierung zeitsynchroner Daten in einem Paketdatennetz, umfassend
- Mittel zur Paketierung mehrerer zeitsynchroner Verbindungen
- Mittel zum periodisch wiederkehrenden Versenden von Datenpaketen einer Verbindung im Abstand einer Periodendauer
- Mittel zum Start der Datenübertragung einer Verbindung, derart, dass die Datenpakete der verschiedenen Verbindungen im Bezug auf die Zeit möglichst gleichverteilt sind,
- Mittel zur Teilung eines der Periodendauer entsprechenden Zeitintervalls in eine der Anzahl der möglichen Verbindungen entsprechende Zahl gleich großer Zeitschlitze,
- Mittel zur fixen Zuordnung jeder möglichen Verbindung zu einem Zeitschlitz,
- Mittel zum Start der Datenübertragung einer neuen Verbindung, derart, dass ein neues Datenpaket in den dieser Verbindung entsprechenden Zeitschlitz eingefügt wird.

In der heutigen Zeit finden zeitsynchrone Verbindungen, also Verbindungen, bei der Daten beim Empfänger in der gleichen zeitlichen Reihenfolge wie beim Sender vorliegen, über paketvermittelnde Datennetze immer mehr Anwendung. Durch die Laufzeit der Pakete kommt es naturgemäß zu einer Verzögerung der Daten, die zeitliche Reihenfolge muss jedoch unbedingt eingehalten werden. Beispiele für zeitsynchrone Verbindungen sind etwa Sprachverbindungen im Bereich der Telefonie oder auch Videoverbindungen, beispielsweise beim Konsumieren eines Fernsehprogramms über das Internet.

In der Regel weisen heutige Datennetze wesentlich mehr Bandbreite auf, als für eine Verbindung notwendig wäre. Die Datenübermittlung erfolgt daher in Datenpaketen, die periodisch wiederkehrend im Abstand einer Paketierungszeit übermittelt werden. Dabei kann es bei der Datenübertragung mehrerer Verbindungen zu Häufungen von Datenpaketen im zeitlichen Verlauf kommen, da die Pakete nach dem Stand der Technik zufällig, das heißt unmittelbar nach der durch das Übertragungssystem nicht beeinflussbaren Anforderung zum Aufbau einer Verbindung seitens eines Teilnehmers erzeugt und übermittelt werden. Ein weiterer Grund für die Häufung von Datenpaketen ist etwa ein Systemtakt, welcher dazu führt, dass ein Datenpaket etwa nur zu bestimmten Zeitpunkten erzeugt beziehungsweise übermittelt werden kann. Je nach dem Verhältnis von Taktperiode zur Paketdatenlänge kommt es hier zu Synchronisations- oder Schwebungseffekten.

Anders als bei verbindungsorientierten Kommunikationsnetzen, in denen etwa das PCM30-System Anwendung findet, kann die Datenübertragung seitens eines datenkonzentrierenden Netzelements in einem Paketdatennetz nicht verzögerungsfrei erfolgen, wenn auf mehreren Übertragungsstrecken Blöcke von Datenpaketen, sogenannte "Bursts", gleichzeitig auftreten und mehrere Übertragungsstrecken auf eine Übertragungsstrecke zusammengefasst werden. Wenn nämlich die Bandbreite auf der einen ausgehenden Übertragungsstrecke für die Übertragung der eingehenden Datenbursts nicht ausreicht, so müssen Daten zwischengespeichert und verzögert weitergegeben werden, sobald freie Bandbreite wieder verfügbar wird. Der geschilderte Sachverhalt trifft dabei auch für Router zu.

In einem verbindungsorientierten Kommunikationsnetz kann es aufgrund der ingenieurmäßigen Auslegung dabei nicht zu solchen Phänomenen kommen, da beispielsweise in einem PCM30-System alle konzentrierenden Elemente für die Bearbeitung aller bestehenden Verbindungen konzipiert sind. Neue Verbindungen werden bei einem solchen Kommunikationsnetz bei Überlastung nämlich nicht aufgebaut. In einem paketvermittelnden Datennetz kann eine gelegentliche Überlastung einzelner Netzkomponenten jedoch wie bereits gezeigt auftreten.

Möglichst geringe Verzögerungszeiten bei der Datenübertragung stellen aber ein maßgebendes Qualitätskriterium bei der Beurteilung zeitsynchroner Verbindungen dar, da Verzögerungen bei etwa einer Telefonverbindung für die Gesprächspartner äußerst störend sind, sobald bestimmte Toleranzgrenzen überschritten werden. Werden die Daten nun aufgrund des geschilderten Sachverhalts, insbesondere auch mehrfach, an Netzelementen verzögert, so können geforderte Qualitätskriterien gegebenenfalls nicht mehr eingehalten werden.

Aus der Schrift US 6,259,695 B1 ist ein Verfahren bekannt, bei dem ein Datenpaket innerhalb eines vordefinierten Zeitrahmens von einem so genannten Switch übernommen und innerhalb eines weiteren Zeitrahmens von diesem Switch wieder weitergeleitet wird. Dabei ist der jeweilig verwendete Zeitschlitz des jeweiligen Zeitrahmens für die Weiterleitung des Datenpaketes nicht fix zugeordnet, sondern es werden beliebige Zeitschlitze innerhalb des Zeitrahmens verwendet. Durch diese Vorgehensweise variiert allerdings die Zeitdifferenz zwischen den einzelnen Datenpaketen einer Verbindung, d.h. die Zeitdifferenz zwischen Datenpaketen derselben Verbindung kann unterschiedlich groß werden und damit können geforderte Qualitätskriterien gegebenenfalls nicht mehr eingehalten werden.

Der Erfindung liegt also die Aufgabe zugrunde, ein Verfahren und eine Vorrichtung anzugeben, welche die Datenpakete bei der Datenkonzentration weniger verzögern und eine konstante Zeitdifferenz bei der Übertragung von Datenpaketen einer Verbindung ermöglichen.

Dies geschieht erfindungsgemäß mit einem Verfahren der eingangs genannten Art, bei dem
- in einem System mehrere verschiedene Paketierungszeiten verwendet werden und bei dem als Periodendauer der größte gemeinsamer Teiler aller Paketierungszeiten gewählt wird.

Dabei wird beim Aufbau einer neuen Verbindung ein günstiger Zeitpunkt zum Einfügen eines Datenpaketes der neuen Verbindung in einen Strom von Datenpaketen vorhandener Verbindungen abgewartet. Das heißt, dass der Beginn der Datenübertragung entsprechend lang verzögert wird. Die Verzögerungszeit bewegt sich für Sprachsysteme dabei im Bereich von einigen Millisekunden und ist für die Praxis daher vernachlässigbar. Der geringe Nachteil, dass der Beginn der Datenübertragung verzögert wird, wird durch die dadurch realisierbare Quasi-Gleichverteilung der Datenpakete mehr als wettgemacht. Werden Übertragungsstrecken mit solcherart verteilten Datenpaketen auf eine Übertragungsstrecke zusammengefasst, so werden nämlich durch den Wegfall von "Bursts" die damit in Zusammenhang stehenden Auswirkungen vermieden und es kommt zu keinen oder nur geringen Verzögerungen von Datenpaketen.

Im einfachsten Fall wird in einem System nur eine Paketierungszeit verwendet. Für das erfindungsgemäße Verfahren und deren Varianten entspricht in diesem Fall die Periodenzeit genau dieser einen Paketierungszeit.

Günstig ist es, wenn die Periodendauer im Bezug auf den zeitlichen Verlauf konstant ist. Hierbei liegen besonders einfache Verhältnisse für die Umsetzung des erfindungsgemäßen Verfahrens vor. Die dieser Variante zugrunde liegende Technologie kann daher ebenso einfach und damit ausfallsicher gestaltet werden.

Es wird eine fixe Zuordnung zwischen einer Verbindung und einem reservierten Zeitschlitz getroffen, wobei einem Zeitschlitz auch mehrere mögliche Verbindungen zugeordnet werden können. Dies ist ein besonders einfaches Verfahren zur Herstellung einer Gleichverteilung. Denkbar ist hier etwa auch, dass Erfahrungswerte in die Zuordnungstabelle einfließen. So kann zum Beispiel das Telefonierverhalten der Teilnehmer ausgewertet und in Folge prognostiziert werden, um zu jeder Zeit eine möglichst gute Gleichverteilung von Datenpaketen realisieren zu können.

In einem Übertragungssystem ist die Paketierungszeit, also die Zeitdifferenz zwischen zwei Paketen einer Verbindung, nicht zwingend für alle Verbindungen gleich groß. So können seitens eines Betreibers eines Kommunikationsnetzes etwa Sprachverbindungen unterschiedlicher Qualität, das heißt mit unterschiedlicher Datenübertragungsrate, angeboten werden. Bei konstanter Paketdatenlänge variiert nun die Paketierungszeit, das heißt Pakete werden häufiger oder weniger häufig übertragen. Werden die verschiedenen Paketierungszeiten in einem System so gewählt, dass jede Paketierungszeit ein ganzzahliges Vielfaches der Periodendauer ist, dann kann das erfindungsgemäße Verfahren auch für solche Systeme eingesetzt werden. Voraussetzung dafür ist also, dass als Periodendauer, für welche die Verfahrensschritte ausgeführt werden, der größte gemeinsame Teiler der mehreren verschiedenen Paketierungszeiten gewählt wird.

Die maximale Anzahl von Verbindungen für einen Zeitschlitz ergibt sich dabei aus der dem Zeitschlitz zugeordneten Paketierungszeit geteilt durch die Periodendauer. In diesem Fall sind die Pakete der verschiedenen Verbindungen, die einen gemeinsamen Zeitschlitz haben, um die Periodendauer verschoben. Wird ein Zeitschlitz beispielsweise für zwei verschieden Verbindungen benutzt, so ergibt sich eine alternierende Abfolge von Paketen der ersten und zweiten Verbindung in diesem Zeitschlitz.

Besonders vorteilhaft ist es,
- wenn beim Aufbau einer neuen Verbindung die zeitlichen Abstände zwischen den Datenpaketen der verschiedenen Verbindungen innerhalb eines der Periodendauer entsprechenden Zeitintervalls ausgewertet werden und
- wenn der Beginn der Datenübertragung der neuen Verbindung derart gewählt wird, dass ein neues Datenpaket in die größte zeitliche Lücke zwischen den bereits bestehenden Datenpaketen eingefügt wird.

Diese Variante der Erfindung ermöglicht die optimale Gleichverteilung von Datenpaketen ohne ein Teilnehmerverhalten berücksichtigen zu müssen. Ausgehend von einer bestimmten Verteilung von Datenpaketen wird ein Datenpaket einer neuen Verbindung in die jeweils größte zeitliche Lücke zwischen Datenpaketen zweier bestehender Verbindungen eingefügt, sodass die Datenpakete zu jedem Zeitpunkt weitgehend gleichverteilt sind. Neue Lücken können dabei beispielsweise dadurch entstehen, dass Verbindungen abgebaut werden. Beim Aufbau einer anderen, neuen Verbindung wird diese Lücke durch das erfindungsgemäße Verfahren jedoch rasch wieder aufgefüllt.

Günstig ist es dabei wenn die Lücke in zwei gleich große Teile geteilt wird. Hier wird ein Paket einer neuen Verbindung in die Mitte einer Lücke gesetzt, um eine optimale Gleichverteilung herzustellen.

Besonders vorteilhaft ist es auch,
- wenn ein der Periodendauer entsprechendes Zeitintervall in eine der Anzahl der möglichen Verbindungen entsprechende Zahl gleich großer Zeitschlitze geteilt wird und
- wenn beim Aufbau einer neuen Verbindung der Startzeitpunkt der Datenübertragung derart gerundet wird, dass ein neues Datenpaket in einen Zeitschlitz eingefügt wird.

Werden Datenpakete zu einem beliebigen Zeitpunkt in einen bestehenden Datenstrom eingefügt, so entstehen in der Regel verschieden große Lücken. Beim Einfügen neuer Datenpakete kann es daher vorkommen, dass keine ausreichend große Lücke dafür gefunden wird. In diesem Fall müssen Pakete bestehender Verbindungen verzögert werden, um eine passende Lücke zu schaffen.

Um dieses Problem zu vermeiden, wird erfindungsgemäß ein der Periodendauer entsprechendes Zeitintervall, welches sich aufgrund der Periodizität laufend wiederholt, so geteilt, dass die Datenpakete bei Vollast gleich weit voneinander entfernt sind. Wird nun bei Teillast ein Paket einer neuen Verbindung eingefügt, so wird die Verzögerungszeit bis zum Beginn einer Datenübertragung so gerundet, dass ein Paket genau in einen vorgesehenen Zeitschlitz passt. Bei maximaler Ausnutzung des Systems folgen die Datenpakete der verschiedenen Verbindungen daher unmittelbar aufeinander, weswegen die Ressourcen hier besonders gut ausgenutzt werden können.

Eine weitere vorteilhafte Variante der Erfindung ist mit einem Verfahren gegeben,
- bei dem in einem System mehrere verschiedene Paketierungszeiten verwendet werden,
- bei dem als Periodendauer der größte gemeinsame Teiler aller Paketierungszeiten gewählt wird und
- bei dem bei der Auswertung der zeitlichen Abstände zwischen den Datenpaketen der verschiedenen Verbindungen innerhalb eines der Periodendauer entsprechenden Zeitintervalls auch jene Verbindungen berücksichtigt werden, zu denen im betrachteten Zeitintervall gerade kein Datenpaket übermittelt wird.

Hier wird wiederum auf ein Übertragungssystem Bezug genommen, bei dem die Paketierungszeit für verschiedene Verbindungen verschieden groß ist. Werden die verschiedenen Paketierungszeiten in einem System so gewählt, dass für jede Paketierungszeit ein ganzzahliges Vielfaches der Periodendauer gewählt wird, dann kann das erfindungsgemäße Verfahren auch für solche Systeme eingesetzt werden. Voraussetzung dafür ist also, dass als Periodendauer der größte gemeinsame Teiler der mehreren verschiedenen Paketierungszeiten gewählt wird und dass bei der Auswertung der zeitlichen Abstände zwischen den Datenpaketen auch jene Verbindungen berücksichtigt werden, zu denen im betrachteten Zeitintervall gerade kein Datenpaket übermittelt wird. Durch die Berücksichtigung aller in einem System vorhandenen Verbindungen können nämlich Kollisionen von Datenpaketen verschiedener Verbindungen wirksam verhindert werden.

Bei der Verwendung verschiedener Paketierungszeiten kann ein Zeitschlitz wie bereits erwähnt auch hier für verschiedene Verbindungen genutzt werden. Die maximale Anzahl von Verbindungen für einen Zeitschlitz ergibt sich dabei wiederum aus der Paketierungszeit geteilt durch die Periodendauer. In diesem Fall sind die Pakete der verschiedenen Verbindungen, die einen gemeinsamen Zeitschlitz haben, wie bereits erwähnt um die Periodendauer verschoben.

Die Aufgabe der Erfindung wird auch mit einer Vorrichtung der eingangs genannten Art gelöst, von welcher in einem System mehrere verschiedene Paketierungszeiten verwendet werden und welche ferner Mittel zur Bestimmung der Periodendauer als größter gemeinsamer Teiler aller Paketierungszeiten umfasst.

Der Beginn der Datenübertragung wird, wie bereits erwähnt, entsprechend verzögert, um so eine weitgehende Gleichverteilung der Datenpakete verschiedener Verbindungen herzustellen. Werden Übertragungsstrecken mit solcherart verteilten Datenpaketen auf eine Übertragungsstrecke zusammengefasst, so werden durch den Wegfall von "Bursts" die damit in Zusammenhang stehenden Auswirkungen vermieden und es kommt zu keinen oder nur geringen Verzögerungen von Datenpaketen.

Maßgebend für diese Erfindung ist eine fixe Zuordnung zwischen einer Verbindung und einem reservierten Zeitschlitz, wobei einem Zeitschlitz auch mehrere mögliche Verbindungen zugeordnet werden können. Dies ermöglicht eine besonders einfache Vorrichtung zur Herstellung einer Gleichverteilung der Daten. Denkbar ist hier etwa auch die Verwendung einer Zuordnungstabelle, in die Erfahrungswerte über das Telefonierverhalten der Teilnehmer einfließen.

Bei der Verwendung verschiedener Paketierungszeiten kann ein Zeitschlitz auch hier wie bereits erwähnt für verschiedene Verbindungen genutzt werden. Die maximale Anzahl von Verbindungen für einen Zeitschlitz ergibt sich dabei wiederum aus der Paketierungszeit geteilt durch die Periodendauer.

Da in einem Übertragungssystem bei Verwendung mehrere verschiedener Paketierungszeiten diese nicht zwingend für alle Verbindungen gleich groß sind, werden bei der erfindungsgemäßen Vorrichtung vorteilhafter Weise die verschiedenen Paketierungszeiten so gewählt, dass jede Paketierungszeit ein ganzzahliges Vielfaches der Periodendauer ist, welche als größte gemeinsame Teiler der mehreren verschiedenen Paketierungszeiten bestimmt wird. So können seitens eines Betreibers eines Kommunikationsnetzes etwa Sprachverbindungen unterschiedlicher Qualität, das heißt mit unterschiedlicher Datenübertragungsrate, angeboten werden.

Besonders vorteilhaft ist schließlich eine Vorrichtung, umfassend
- Mittel zur Auswertung der zeitlichen Abstände zwischen den Datenpaketen der verschiedenen Verbindungen innerhalb eines der Periodendauer entsprechenden Zeitintervalls und
- Mittel zum Start der Datenübertragung einer neuen Verbindung, derart, dass ein neues Datenpaket in die größte zeitliche Lücke zwischen den bereits bestehenden Datenpaketen eingefügt wird.

Diese Vorrichtung ermöglicht die optimale Gleichverteilung von Datenpaketen ohne ein Teilnehmerverhalten berücksichtigen zu müssen. Ausgehend von einer bestimmten Verteilung von Datenpaketen wird ein Datenpaket einer neuen Verbindung, wie bereits erwähnt, in die jeweils größte zeitliche Lücke zwischen Datenpaketen zwei bestehender Verbindungen eingefügt, sodass die Datenpakete zu jedem Zeitpunkt weitgehend gleichverteilt sind.

Im Übrigen wird darauf hingewiesen, dass die für das erfindungsgemäße Verfahren genannten Varianten und Vorteile gleichermaßen auch auf die erfindungsgemäße Vorrichtung anwendbar sind.

Die Erfindung wird nun anhand eines in den Figuren dargestellten Ausführungsbeispiels näher erläutert.

Es zeigen:
- Figur 1:: das Zusammenfassen zweier Übertragungsstrecken auf eine Übertragungsstrecke nach dem Stand der Technik;
- Figur 2:: das erfindungsgemäße Einfügen eines Datenpakets einer neuen Verbindung in ein bestehendes System;
- Figur 3:: ein System mit direkt aufeinanderfolgenden Zeitschlitzen zu verschiedenen Zeitpunkten;
- Figur 4:: das Zusammenfassen zweier Übertragungsstrecken mit erfindungsgemäßer Gleichverteilung der Datenpakete auf eine Übertragungsstrecke;
- Figur 5:: ein System, bei dem für verschiedene Verbindungen unterschiedliche Paketierungszeiten zur Anwendung kommen;
- Figur 6:: ein System, bei dem einem Zeitschlitz mehrere Verbindungen zugeordnet werden.

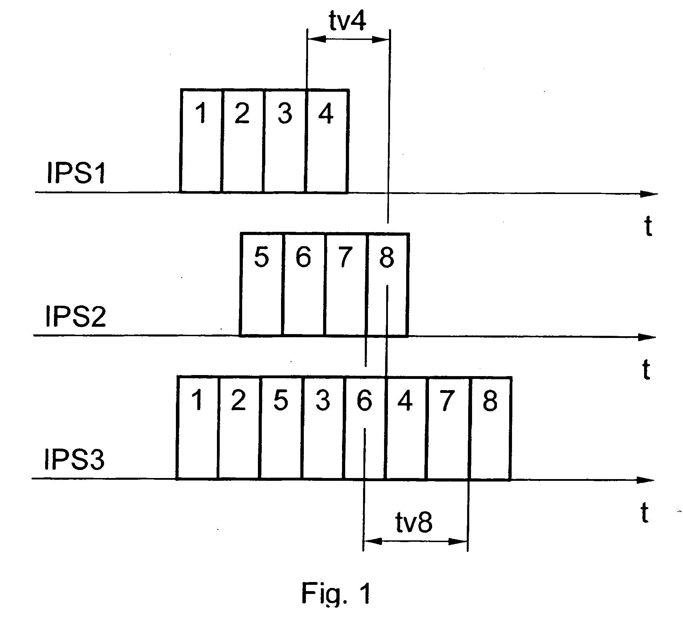

Figur 1 zeigt das Zusammenfassen zweier Übertragungsstrecken auf eine Übertragungsstrecke nach dem Stand der Technik. Dabei werden Datenpakete einer ersten bis vierten Verbindung 1..4 auf einer ersten Übertragungsstrecke IPS1 und Datenpakete einer fünften bis achten Verbindung 5..8 auf einer zweiten Übertragungsstrecke IPS2 übertragen. Die erste und zweite Übertragungsstrecke IPS1 und IPS2 werden - beispielsweise in einem Vermittlungsknoten - zu einer dritten Übertragungsstrecke IPS3 zusammengefasst. In der Figur 1 ist dabei die Verteilung der Datenpakete über die Zeit t dargestellt.

Für die folgende Betrachtung wird der Einfachheit halber angenommen, dass die Datenpakete verzögerungsfrei übermittelt werden. Weiterhin wird angemerkt, dass die Paketierungszeit im gezeigten Beispiel größer als der dargestellte Zeitausschnitt ist, sodass zu einer Verbindung jeweils nur ein Datenpaket zu sehen ist. Gut erkennbar ist, dass die Datenpakete im gezeigten Beispiel blockweise auftreten und es zu einer zeitlichen Überlappung der Pakete auf der ersten und der zweiten Übertragungsstrecke IPS1 und IPS2 kommt.

Bei der Zusammenfassung der ersten und der zweiten Übertragungsstrecke IPS1 und IPS2 wird nun zuerst das Datenpaket der ersten Verbindung 1 in die dritte Übertragungsstrecke IPS3 übermittelt. Es folgt unmittelbar das Datenpaket der zweiten Verbindung 2. Dabei ergibt sich ein Konflikt dahingehend, dass dabei auch teilweise schon das Datenpaket der fünften Verbindung 5 zur Übermittlung ansteht. Dieses wird jedoch verzögert und erst nach dem Datenpaket der zweiten Verbindung 2 übertragen. In Folge wird abwechselnd jeweils ein Datenpaket aus der ersten und aus der zweiten Übertragungsstrecke IPS1 und IPS2 entnommen und in die dritte Übertragungsstrecke IPS3 übermittelt, solange eine zeitliche Überlappung der Pakete vorliegt. Für die dritte Übertragungsstrecke ergibt sich somit die Reihenfolge 1 2 5 3 6 4 7 8. In der Figur 1 gut zu erkennen ist die zeitliche Verzögerung verschiedener Datenpakete. So sind zum Beispiel für die Datenpakete der vierten und achten Verbindung 4 und 8 die Verzögerungszeiten tv4 und tv8 eingetragen.

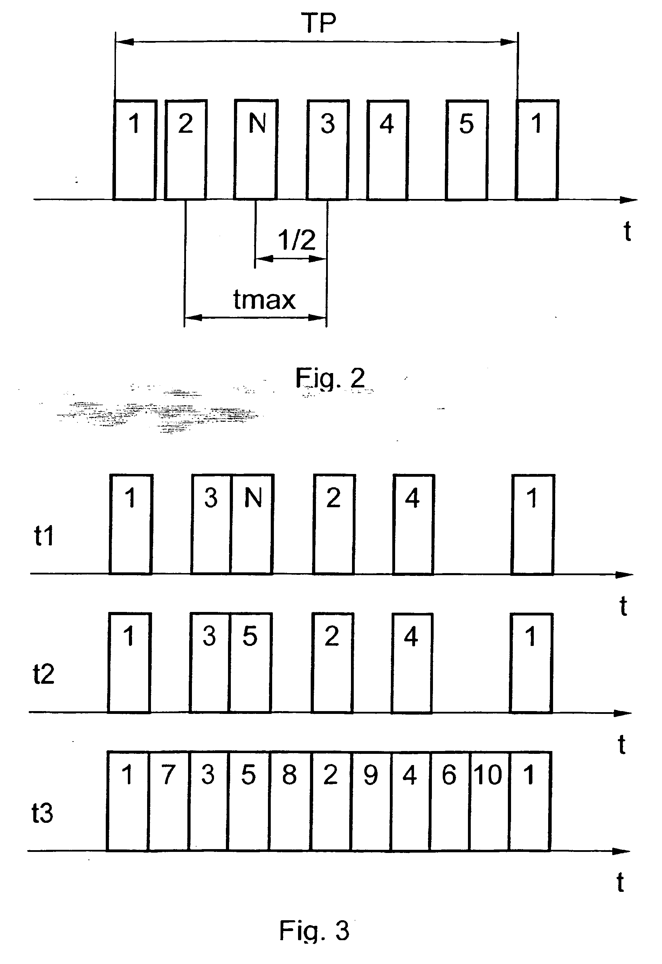

In Figur 2 ist eine Variante des erfindungsgemäßen Verfahrens dargestellt, wobei hier für die erste Verbindung 1 eine vollständige Periode der Übertragung der Datenpakete zu sehen ist. Hierzu ist die Periodendauer TP für die erste Verbindung 1 eingetragen. Es wird für die folgende Betrachtung der Einfachheit halber angenommen, dass die Paketierungszeit TPA für alle Verbindungen gleich groß und damit gleich der Periodendauer TP ist. Für die Belange der Figur 2 werden die Vorgänge einer einzigen Übertragungsstrecke isoliert betrachtet.

Auf dem Zeitstrahl t sind Datenpakete der ersten bis fünften Verbindung 1..5 eingetragen, wobei zwischen den Datenpaketen verschieden große zeitliche Abstände zu sehen sind. Das resultierende Muster wiederholt sich dabei periodisch im Abstand der Periodendauer TP, konstante Verhältnisse vorausgesetzt. In Folge wird eine neue Verbindung N aufgebaut, weswegen die zugehörigen Datenpakete in den zeitlichen Ablauf einzufügen sind. Dazu wird der größte zeitliche Abstand zwischen zwei Datenpaketen tmax ermittelt. Im gezeigten Fall befindet sich die größte Lücke zwischen den Datenpaketen der zweiten und der dritten Verbindung 2 und 3. Das Datenpaket der neuen Verbindung N wird daher in diese Lücke eingefügt, und zwar vorzugsweise in die Mitte der Lücke tmax/2. Auf diese Weise ergibt sich stets eine weitgehend gleichmäßige zeitliche Verteilung der Datenpakete. Zu diesem Zweck wird beim Aufbau einer neuen Verbindung N der Beginn der Datenübertragung entsprechend lang verzögert. Die Verzögerungszeit bewegt sich für Sprachsysteme dabei im Bereich von einigen Millisekunden und ist für die Praxis daher vernachlässigbar.

In Figur 3 ist ein zu Figur 2 ähnliches System zu einem ersten bis dritten Zeitpunkt t1..t3 zu sehen. Im Unterschied zum System der Figur 2 wird hier ein der Periodendauer TP entsprechendes Zeitintervall in eine der Anzahl der möglichen Verbindungen entsprechende Zahl, hier 10, gleich großer Zeitschlitze geteilt und ein Datenpaket bei Bedarf in einen dieser Zeitschlitze eingefügt. Dies hat den Vorteil, dass die Datenpakete der verschiedenen Verbindungen bei Vollast optimal gleichverteilt sind. Bei maximaler Ausnutzung einer Übertragungsstrecke, wie zum Zeitpunkt t3 dargestellt, folgen die Datenpakete der verschiedenen Verbindungen dabei ohne zeitliche Lücken direkt aufeinander. Diese optimale Gleichverteilung ist bei einem System nach Figur 2 nicht zwingend der Fall.

Zu einem ersten Zeitpunkt t1 sind Datenpakete einer ersten bis vierten Verbindung 1..4 zu sehen. Weiterhin zu sehen ist, dass ein Datenpaket einer neuen Verbindung N in das System eingefügt wird. Für die betreffende Verbindung ist zum Zeitpunk t2 daher der Index 5 eingetragen. Die Darstellung zum dritten Zeitpunkt t3 zeigt das System nun bei Vollast. Anhand der Abfolge der Indizes für die verschiedenen Verbindungen 1 7 3 5 8 2 9 4 6 10 1 ist gut zu erkennen, in welcher zeitlichen Abfolge die Pakete in das System eingefügt wurden.

Es wird angemerkt, dass sich das in Figur 3 dargestellte System von einem System, bei dem jeder Verbindung ein Zeitschlitz fix zugeordnet wird, bei Vollast nicht unterscheidet, da hier die Gleichverteilung der Datenpakete automatisch gegeben ist. Bei Teillast ist bei einem System mit fixen Zuordnungen eine Ungleichverteilung der Pakete jedoch sehr wohl möglich.

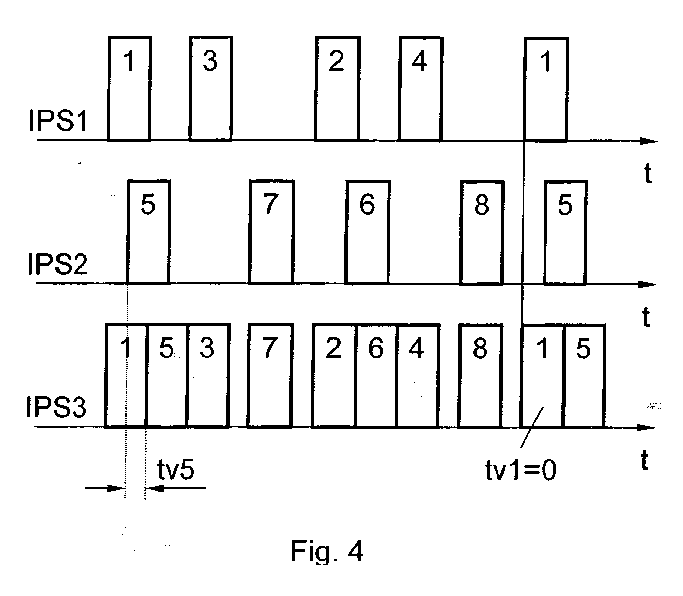

Figur 4 zeigt nun das Zusammenfassen zweier Übertragungsstrecken mit erfindungsgemäßer Gleichverteilung der Datenpakete auf eine Übertragungsstrecke. Dabei werden wie in Figur 1 Datenpakete einer ersten bis vierten Verbindung 1..4 auf einer ersten Übertragungsstrecke IPS1 und Datenpakete einer fünften bis achten Verbindung 5..8 auf einer zweiten Übertragungsstrecke IPS2 übertragen. Die erste und zweite Übertragungsstrecke IPS1 und IPS2 werden wiederum zu einer dritten Übertragungsstrecke IPS3 zusammengefasst.

Im Unterschied zu Figur 1 ist die Periodendauer TP oder Paketierungszeit TPA im gezeigten Beispiel nicht größer als der dargestellte Zeitausschnitt, sodass zu der ersten und der fünften Verbindung 1 und 5 jeweils zwei Datenpakete zu sehen sind. Gut erkennbar ist die Gleichverteilung der Pakete und die zeitliche Überlappung einiger Pakete auf der ersten und der zweiten Übertragungsstrecke IPS1 und IPS2. Es wird auch darauf hingewiesen, dass die Verhältnisse in den Figuren die realen Gegebenheiten nur unzureichend widerspiegeln, da die Paketierungszeit in der Regel deutlich größer als die Paketlänge ist und somit wesentlich mehr Verbindungen als dargestellt geschalten werden können.

Bei der Betrachtung des Zusammenfassens der ersten und zweiten Übertragungsstrecke IPS1 und IPS2 wird mit einem Datenpaket der ersten Verbindung 1 begonnen, welches verzögerungsfrei in die dritte Übertragungsstrecke IPS3 übermittelt wird. Es folgt das Datenpaket der fünften Verbindung 5, wobei sich durch die zeitliche Überlappung ein Konflikt mit dem Datenpaket der ersten Verbindung 1 ergibt. Das Datenpaket der fünften Verbindung 5 wird daher verzögert übertragen. Unter der Annahme, dass bei einer zeitlichen Überlappung Datenpakete, die zuerst empfangen werden, vorrangig behandelt werden, ergibt sich für die dritte Übertragungsstrecke IPS3 die Reihenfolge 1 5 3 7 2 6 4 8. Das genannte Prinzip zur Reihung ist dabei auch unter dem Begriff "first in first out" bekannt.

In der Figur 4 ist die zeitliche Verzögerung verschiedener Datenpakete wiederum gut zu erkennen. So ist zum Beispiel für das Datenpaket der ersten Verbindung 1 die Verzögerungszeit tv1=0, für die fünfte Verbindung 5 die Verzögerungszeit tv5 eingetragen. Unter Bezugnahme auf die Figur 1 wird hier der Vorteil des erfindungsgemäßen Verfahrens besonders gut deutlich. Während in der Figur 1 beispielsweise die Datenpaket der vierten und achten Verbindung 4 und 8 maßgeblich verzögert werden, werden die Datenpakete bei dem in der Figur 4 dargestellten System nicht oder nur wenig verzögert. Eine möglichst geringe Verzögerungszeit ist dabei ein wichtiges Qualitätskriterium bei der Beurteilung zeitsynchroner Verbindungen, etwa bei Telefonverbindungen über paketvermittelnde Netze.

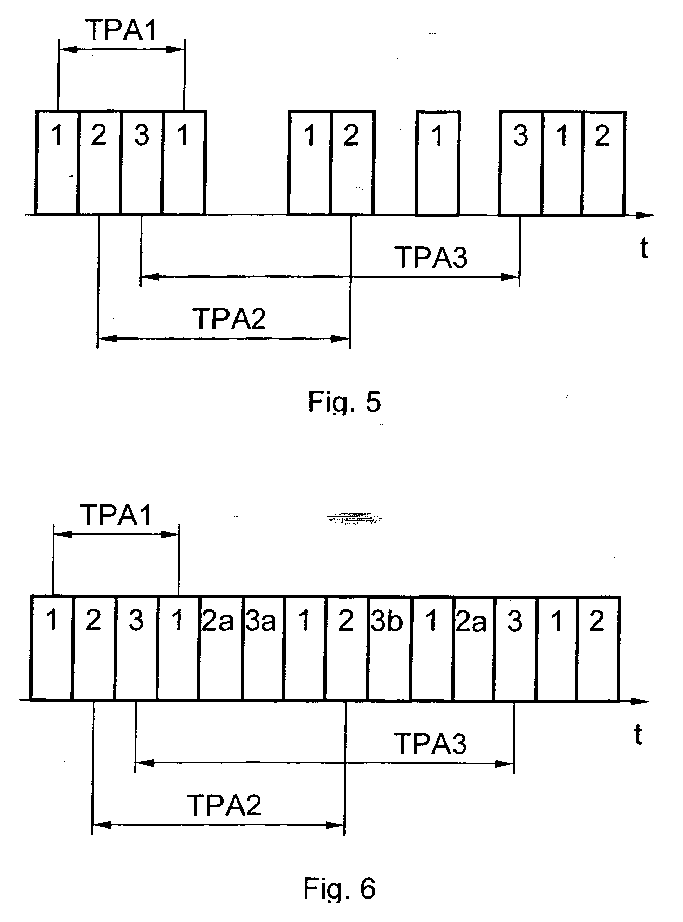

In Figur 5 ist schließlich ein System dargestellt, bei dem für verschiedene Verbindungen unterschiedliche Paketierungszeiten TPA zur Anwendung kommen. Zu sehen sind Datenpakete einer ersten Verbindung 1 die im Abstand einer ersten Paketierungszeit TPA1 periodisch übermittelt werden. In den entstehenden Lücken werden nun auch Pakete anderer Verbindungen übermittelt, nämlich Pakete einer zweiten Verbindung 2, welche im Abstand einer zweiten Paketierungszeit TPA2 übermittelt werden, und Pakete einer dritten Verbindung 3, welche im Abstand einer dritten Paketierungszeit TPA3 übermittelt werden. Um Kollisionen zu verhindern ist dabei zu beachten, dass jede Paketierungszeit TPA ein ganzzahliges Vielfaches der Periodendauer TP sein muss. Im gezeigten Fall ist daher die Periodendauer TP gleich der ersten Paketierungszeit TPA1, da diese den größten gemeinsamen Teiler aller im System vorhanden Paketierungszeiten TPA1..TPA3 darstellt. Für die Anwendung des erfindungsgemäßen Verfahrens ist weiterhin zu beachten, dass bei der Ausführung der Verfahrensschritte alle bestehenden Verbindungen 1..3 berücksichtigt werden müssen, auch wenn im betrachteten Zeitintervall zu bestimmten Verbindungen 1..3 gerade kein Datenpaket übermittelt wird. Würde das Verfahren beispielsweise ohne diese Berücksichtigung auf das zweite in der Figur 5 dargestellte Intervall angewendet werden, so würde ein Datenpaket einer neuen Verbindung mittig in die freie Lücke eingefügt werden, was in einem darauf folgenden Intervall unweigerlich zur Kollision mit Datenpaketen der zweiten Verbindung 2 und/oder der dritten Verbindung 3 führen würde.

In die Lücken, die in der in Figur 5 dargestellten Abfolge von Datenpaketen zu sehen sind, können Datenpakete weiterer Verbindungen eingefügt werden. Zu beachten ist dabei, dass in einem bestimmten Zeitschlitz Paketierungszeiten TPA nicht gemischt werden dürfen. Das bedeutet, dass für den zweiten Zeitschlitz die zweite Paketierungszeit TPA2, für den dritten Zeitschlitz die dritte Paketierungszeit TPA3 unbedingt eingehalten werden muss. In den zweiten Zeitschlitz kann daher ein Datenpaket einer weiteren zweiten Verbindung 2a, in den dritten Zeitschlitz können daher Datenpakete von zwei weiteren dritten Verbindungen 3a und 3b eingefügt werden. Diese Abfolge ist in Figur 6 dargestellt.

## Patentansprüche

1. Verfahren zur Paketierung zeitsynchroner Daten bei einer Übertragung in einem Paketdatennetz,
- wobei im Paketdatennetz mehrere zeitsynchrone Verbindungen (1..5) bestehen und
- wobei Datenpakete einer Verbindung (1..5) periodisch wiederkehrend im Abstand einer Periodendauer (TP) versendet werden,
- wobei der Beginn der Datenübertragung einer Verbindung (1..5) derart gewählt wird, dass die Datenpakete der verschiedenen Verbindungen (1..5) im Bezug auf die Zeit (t) möglichst gleichverteilt sind,
- wobei ein der Periodendauer (TP) entsprechendes Zeitintervall in eine der Anzahl der möglichen Verbindungen (1..10) entsprechende Zahl gleich großer Zeitschlitze geteilt wird,
- wobei jeder möglichen Verbindung (1..10) ein Zeitschlitz fix zugeordnet wird und
- wobei beim Aufbau einer neuen Verbindung (N) der Beginn der Datenübertragung derart gewählt wird, dass ein neues Datenpaket in den dieser Verbindung (N) entsprechenden Zeitschlitz eingefügt wird,
**dadurch gekennzeichnet,**
- **dass** in einem System mehrere verschiedene Paketierungszeiten (TPA1, TPA2, TPA3) verwendet werden und
- **dass** als Periodendauer (TP) der größte gemeinsame Teiler aller Paketierungszeiten (TPA1, TPA2, TPA3) gewählt wird.

2. Verfahren nach Anspruch 1, **dadurch**
**gekennzeichnet,**
- **dass** beim Aufbau einer neuen Verbindung (N) die zeitlichen Abstände zwischen den Datenpaketen der verschiedenen Verbindungen (1..5) innerhalb eines der Periodendauer (TP) entsprechenden Zeitintervalls ausgewertet werden und
- **dass** der Beginn der Datenübertragung der neuen Verbindung (N) derart gewählt wird, dass ein neues Datenpaket in die größte zeitliche Lücke zwischen den bereits bestehenden Datenpaketen eingefügt wird.

3. Verfahren nach Anspruch 2, **dadurch**
**gekennzeichnet , dass** die Lücke in zwei gleich große Teile geteilt wird.

4. Verfahren nach Anspruch 2 oder 3, **dadurch**
**gekennzeichnet,**
- **dass** ein der Periodendauer (TP) entsprechendes Zeitintervall in eine der Anzahl der möglichen Verbindungen (1..10) entsprechende Zahl gleich großer Zeitschlitze geteilt wird und
- **dass** beim Aufbau einer neuen Verbindung (N) der Startzeitpunkt der Datenübertragung derart gerundet wird, dass ein neues Datenpaket in einen Zeitschlitz eingefügt wird.

5. Verfahren nach einem der Ansprüche 2 bis 4, **dadurch**
**gekennzeichnet,**
- **dass** in einem System mehrere verschiedene Paketierungszeiten (TPA1, TPA2, TPA3) verwendet werden,
- **dass** als Periodendauer (TP) der größte gemeinsame Teiler aller Paketierungszeiten (TPA1, TPA2, TPA3) gewählt wird und
- **dass** bei der Auswertung der zeitlichen Abstände zwischen den Datenpaketen der verschiedenen Verbindungen (1..3) innerhalb eines der Periodendauer (TP) entsprechenden Zeitintervalls auch jene Verbindungen (2..3) berücksichtigt werden, zu denen im betrachteten Zeitintervall gerade kein Datenpaket übermittelt wird.

6. Vorrichtung zur Paketierung zeitsynchroner Daten in einem Paketdatennetz, umfassend
- Mittel zur Paketierung mehrerer zeitsynchroner Verbindungen (1..5) und
- Mittel zum periodisch wiederkehrenden Versenden von Datenpaketen einer Verbindung (1..5) im Abstand einer Periodendauer (TP),
- Mittel zum Start der Datenübertragung einer Verbindung (1..5), derart, dass die Datenpakete der verschiedenen Verbindungen (1..5) im Bezug auf die Zeit (t) möglichst gleichverteilt sind,
- Mittel zur Teilung eines der Periodendauer (TP) entsprechenden Zeitintervalls in eine der Anzahl der möglichen Verbindungen (1..10) entsprechende Zahl gleich großer Zeitschlitze,
- Mittel zur fixen Zuordnung jeder möglichen Verbindung (1..10) zu einem Zeitschlitz,
- Mittel zum Start der Datenübertragung einer neuen Verbindung (N), derart, dass ein neues Datenpaket in den dieser Verbindung (N) entsprechenden Zeitschlitz eingefügt wird,
**dadurch gekennzeichnet,**
- **dass** in einem System mehrere verschiedene Paketierungszeiten (TPA1, TPA2, TPA3) verwendet werden
- und die Vorrichtung ferner Mittel zur Bestimmung der Periodendauer (TP) als größter gemeinsamer Teiler aller Paketierungszeiten (TPA1, TPA2, TPA3) umfasst.

7. Vorrichtung nach Anspruch 6, umfassend,
- Mittel zur Auswertung der zeitlichen Abstände zwischen den Datenpaketen der verschiedenen Verbindungen (1..5) innerhalb eines der Periodendauer (TP) entsprechenden Zeitintervalls und
- Mittel zum Start der Datenübertragung einer neuen Verbindung (N), derart, dass ein neues Datenpaket in die größte zeitliche Lücke zwischen den bereits bestehenden Datenpaketen eingefügt wird.

## Claims

1. Method for packetizing time-synchronous data in a transmission in a packet data network,
- wherein there are a number of time-synchronous connections (1..5) in the packet data network and
- wherein data packets of a connection (1..5) are sent out periodically repetitively at intervals of one period interval (TP),
- wherein the beginning of the data transmission of a connection (1..5) is selected in such a manner that the data packets of the various connections (1..5) are distributed as evenly as possible with respect to time (t),
- wherein a time interval corresponding to the period interval (TP) is divided into a number of equally large time slots corresponding to the number of possible connections (1..10),
- wherein a time slot is permanently allocated to each possible connection (1..10), and
- wherein, when a new connection (N) is set up, the beginning of the data transmission is selected in such a manner that a new data packet is inserted into the time slot corresponding to this connection (N),
**characterized in that**
- a number of different packetizing times (TPA1, TPA2, TPA3) are used in a system, and
- that the greatest common divisor of all packetizing times (TPA1, TPA2, TPA3) is selected as period interval (TP).

2. Method according to Claim 1, **characterized in that**
- when a new connection (N) is set up, the time intervals between the data packets of the various connections (1..5) are evaluated within a time interval corresponding to the period interval (TP), and
- **in that** the beginning of the data transmission of the new connection (N) is selected in such a manner that a new data packet is inserted into the greatest time gap between the data packets already existing.

3. Method according to Claim 2, **characterized in that** the gap is divided into two equally large parts.

4. Method according to Claim 2 or 3, **characterized in that**
- a time interval corresponding to the period interval (TP) is divided into a number of equally large time slots corresponding to the number of possible connections (1..10), and
- **in that** when a new connection (N) is set up, the starting time of the data transmission is rounded in such a manner that a new data packet is inserted into a time slot.

5. Method according to one of Claims 2 to 4, **characterized in that**
- a number of different packetizing times (TPA1, TPA2, TPA3) are used in a system,
- **in that** the greatest common divisor of all packetizing times (TPA1, TPA2, TPA3) is selected as period interval (TP), and
- **in that** when the time intervals between the data packets of the various connections (1..3) are evaluated within a time interval corresponding to the period interval (TP), those connections (2..3) for which no data packet is currently transmitted in the time interval observed are also taken into consideration.

6. Device for packetizing time-synchronous data in a packet data network, comprising
- means for packetizing a number of time-synchronous connections (1..5) and
- means for periodically repetitively sending out data packets of a connection (1..5) at intervals of one period interval (TP),
- means for starting the data transmission of a connection (1..5) in such a manner that the data packets of the various connections (1..5) are distributed as evenly as possible with respect to time (t),
- means for dividing a time interval corresponding to the period interval (TP) into a number of equally large time slots corresponding to the number of possible connections (1..10),
- means for firmly allocating each possible connection (1..10) to a time slot,
- means for starting the data transmission of a new connection (N) in such a manner that a new data packet is inserted into the time slot corresponding to this connection (N),
**characterized in that**
- a number of different packetizing times (TPA1, TPA2, TPA3) are used in a system,
- and the device also comprises means for determining the period interval (TP) as the greatest common divisor of all packetizing times (TPA1, TPA2, TPA3).

7. Device according to Claim 6, comprising
- means for evaluating the time intervals between the data packets of the various connections (1..5) within a time interval corresponding to the period interval (TP), and
- means for starting the data transmission of a new connection (N) in such a manner that a new data packet is inserted into the greatest time gap between the data packets already existing.

## Revendications

1. Procédé de mise en paquets de données synchrones lors d'une transmission dans un réseau de données par paquet,
- dans lequel plusieurs liaisons (1..5) synchrones sont constituées dans le réseau de données par paquet et
- dans lequel on envoie des paquets de données d'une liaison (1..5) de manière répétée périodiquement à l'intervalle d'une durée de (TP) de période,
- dans lequel on choisit le débit de la transmission de données d'une liaison (1..5) de façon à répartir d'une manière aussi uniforme que possible par rapport au temps des paquets de données des diverses liaisons (1..5),
dans lequel, on subdivise un intervalle de temps correspondant à la durée (TP) de période en un nombre de créneaux temporels égaux correspondant au nombre des liaisons (1..10) possible,
- dans lequel on associe de manière fixe un créneau temporel à chaque liaison (1..10) possible et
- dans lequel, lors de l'établissement d'une liaison (N) nouvelle, on choisit le débit de la transmission de données de manière à insérer un paquet de données nouveau dans le créneau temporel correspondant à cette liaison (N),
**caractérisé**
- **en ce que** l'on utilise dans un système plusieurs temps (TPA1, TPA2, TPA3) différents de mise en paquets et
- **en ce que** l'on choisit la durée (TP) de période égale au plus grand diviseur commun de tous les temps (TPA1, TPA2, TPA3) de mise en paquets.

2. Procédé suivant la revendication 1, **caractérisé**
- **en ce que**, lors de l'établissement d'une liaison (N) nouvelle, on exploite les distances temporelles entre les paquets de données des diverses liaisons (1..5) dans un intervalle de temps correspondant à la durée (TP) de période,
- **en ce qu'**on choisit le début de la transmission de données de la liaison (N) nouvelle de façon à insérer un nouveau paquet de données dans la lacune de temps la plus grande entre les paquets de données existant déjà.

3. Procédé suivant la revendication 2, **caractérisé**
**en ce que** l'on divise la lacune en deux parties égales.

4. Procédé suivant la revendication 2 ou 3, **caractérisé**
- **en ce que** l'on divise un intervalle de temps correspondant à la durée de (TP) de période en un nombre égal de créneaux temporels correspondant au nombre des liaisons (1..10) possibles, et
- **en ce que**, lors de l'établissement d'une liaison (N) nouvelle, on arrondit l'instant de lancement de la transmission de données de façon à insérer un nouveau paquet de données dans un créneau temporel.

5. Procédé suivant l'une des revendications 2 à 4, **caractérisé**
- **en ce que**, l'on utilise dans un système plusieurs temps (TPA1, TPA2, TPA3) différents de mise en paquets,
- **en ce que** l'on choisit comme durée (TP) de période le plus grand commun diviseur de tous les temps (TPA1, TPA2, TpA3) de mise en paquets et
- **en ce que**, lors de l'exploitation des distances temporelles entre les paquets de données des diverses liaisons (1..3) à l'intérieur d'un intervalle de temps correspondant à la durée (TP) de période, on tient compte aussi de toute liaison (2..3) à laquelle il n'a précisément pas été transmis de paquet de données dans l'intervalle de temps considéré.

6. Dispositif de mise en paquets de données synchrones dans un réseau de paquet de données, comprenant
- des moyens de mise en paquets de plusieurs liaisons (1..5) synchrones et
- des moyens d'envois répétés périodiquement de paquets de données d'une liaison (1..5) à l'intervalle d'une durée (TP) de période,
- des moyens pour lancer la transmission des données d'une liaison (1..5) de façon à ce que les paquets de données de diverses liaisons (1..5) soit répartie aussi uniformément que possible sur le temps (t),
- des moyens de division d'un intervalle de temps correspondant à la durée (TP) de période en un nombre de créneaux temporels égal correspondant au nombre de liaisons (1..10) possibles,
- des moyens d'associations de manière fixe de chaque liaison (1..10) possible à un créneau temporel,
- des moyens de lancement de la transmission de données d'une liaison (N) nouvelle de façon à insérer un nouveau paquet de données dans un créneau temporel correspondant à cette liaison (N),
**caractérisé**
- **en ce qu'**il est utilisé dans un système plusieurs temps différents (TPA1, TPA2, TPA3) de mise en paquets,
- et le dispositif comprend en outre des moyens de détermination de la durée (TP) de période sous la forme du plus grand diviseur commun de tous les temps (TPA1, TPA2, TPA3) de mise en paquets.

7. Dispositif suivant la revendication 6, comprenant
- des moyens d'exploitation des distances temporelles entre des paquets de données de diverses liaisons (1..5) dans un intervalle de temps correspondant à la durée (TP) de période et
- des moyens de lancement de la transmission de données d'une nouvelle liaison (N) de façon à insérer un nouveau paquet de données dans la plus grande lacune temporelle comprise entre les paquets de données existant déjà.
